# EUROPEAN PATENT SPECIFICATION

(11) **EP 3 406 051 B1**
(45) Date of publication and mention of the grant of the patent: **04.12.2019**
(21) Application number: 17786941.9
(22) Date of filing: 20.10.2017
(51) Int. Cl.: H04L 9/08, H04L 9/00

(54) **METHOD FOR GENERATING A PAIR OF TERMINAL ASSOCIATED KEYS USING A TERMINAL AND A GATEWAY, A METHOD FOR SECURE DATE EXCHANGE USING THE METHOD, A TERMINAL AND A GATEWAY**
VERFAHREN ZUR ERZEUGUNG EINES PAARES VON MIT EINEM ENDGERÄT ASSOZIIERTEN SCHLÜSSELN MITHILFE EINES ENDGERÄTS UND EINES GATEWAY, VERFAHREN ZUM SICHEREN DATENAUSTAUSCH MITHILFE DES VERFAHRENS, EINES ENDGERÄTS UND EINES GATEWAY
PROCÉDÉ POUR GÉNÉRER L'ASSOCIATION DE DEUX TOUCHES DE TERMINAL ASSOCIÉES À L'AIDE D'UN TERMINAL ET D'UNE PASSERELLE, PROCÉDÉ DE SÉCURISATION D'ÉCHANGE DE DATES UTILISANT LE PROCÉDÉ, UN TERMINAL ET UNE PASSERELLE

(30) Priority: 20.10.2016 EP 16194753
(43) Date of publication of application: 28.11.2018
(73) Proprietor: Dr. Max Iann Invest GmbH, 96148 Baunach (DE)
(72) Inventor: FAHRENKRUG, Jacob, 16761 Hennigsdorf (DE)
(74) Representative: Gulde & Partner
(86) International application number: PCT/EP2017/076876
(87) International publication number: WO 2018/073425

(56) References cited:
- EP-A2- 0 844 762
- WO-A1-2005/006643
- US-A1- 2002 164 035
- US-A1- 2010 281 275

## Description

### FIELD OF INVENTION

The present invention relates generally to a method for generating a pair of terminal associated keys using a terminal and a gateway, a method for secure date exchange using the method for generating a pair of terminal associated keys using a terminal and a gateway. Further provided are a terminal and a gateway adapted to use the methods.

### BACKGROUND OF THE INVENTION

Digital rights management (DRM) is used widely to control the distribution of digital content on different platforms. Digital content can be digital audio, video, text multimedia or licenses to use digital media. US 2010/0281275 A1 addresses digital rights management in the context of a method of recording content on a disc and a content providing server in the internet domain. US 2002/0164035 A1 discloses a method for use in distribution system having a key management server in the internet domain. WO 2005/006643 A1 discloses a method for secure transmissions using a content server in the internet domain. EP 0 844 762 A2 discloses a secure date transmission system using a centralized agency.

Current DRM systems have centralized vulnerability of key management. If content is required to be available on different devices, it has to be agreed on the lowest common denominator in the key management. Public key infrastructures (PKI) employ a central server accessible over the internet as a central unit. A server is a computer program or computer that provides computer functions, such as utilities, data, or other resources, which can be accessed by other computers or programs ("clients"), usually via a network. The term server has two related but different basic meanings: A server as software is a program that communicates in a client-server environment with another program, the client. The client can use specific features provided by the server software, such as utilities, network services, access to a file system, or a database. A hardware server is a computer running on one or more servers. In common PKI structures, the term "server" relates to a centrally hosted server in a data processing center provided with the private key material for the root CA (root certificate authority).

From there, the sub-CAs and the terminal certificates are handed out. This however means that safety keys need to be stored on possibly insecure storage means accessible over the internet.

### SUMMARY OF THE INVENTION

In accordance with one aspect of the present invention there is provided a method according to claim 1.

Thus, the invention solves the problems of a centralized key management by introducing a decentralized key management on a private or home based gateway. A home gateway is a gateway between the access network and the home network and supports the various techniques used in home networking. It realizes the connection between the home network and the Internet with the various services. In the definition of "home gateway", the invention refers to a transfer point of encrypted user data in a decentralized architecture.

The home gateway is installed in a private network, preferably in a private household. In this case, the home gateway becomes the administrative interface for additional clients that are connected to the home gateway and to the handover of encrypted key material. Compared to the above-described state of the art PKI systems for the allocation of terminal certificates, the home gateway becomes the issuer of the terminal certificates as opposed to the central server in the data center.

Common PKI system rely on central administration mechanisms like Online Certificate Status Protocols (OCSP) in order to check the validity and revocation of identities. The invention changes this thinking by shifting the responsibility to the end user in his home network who can now define the rotation of identities for the end user's personal devices. Since the home gateway is part of the home area network of people's households and root-CAs are only generated on the device and never leave the device it puts standard PKI mechanisms out of work and turns responsibility upside down - from a central authority to a decentral authority.

The invention finds application in the protection of communication between terminals. The key material is not managed by a central root CA, but by local root CAs generated per household. This results in a completely decentralized security architecture, which greatly simplifies the rotation of keys.

It is pointed out that the term "gateway" used in the following description relates to a home gateway in a private household.

In particular, the invention solves the problem of key management by introducing unique key pairs which advantageously can be assigned to a specific user. Every household or every user can be permanently assigned to a gateway. A gateway gives content providers the possibility to tie specific content to a unique user ID. This user ID is the public part of a pair of keys, preferably asymmetric keys. This bond can be carried out also by means of verifiable and secure cryptography.

Preferably, the gateway comprises a trusted platform module and the method further comprises the step of storing the pair of gateway keys Pub-G, Pr-G and the pair of terminal keys Pub-T, Pr-T in the trusted platform module.

Thus, every household or every user can be permanently assigned to a trusted platform module (TPM). TMP is an international standard for a secure cryptoprocessor, which is a dedicated microprocessor designed to secure hardware by integrating cryptographic keys into devices. The provision of a TPM for every user gives content providers the opportunity to use a TPM without the presence of a TPM on all playback platforms itself. In other words, a device with a TPM gives content providers the possibility to tie specific content to a unique user ID. In addition, content providers can store sensitive information such as license keys, authentication keys securely in the TPM which are only loaded into a volatile memory when needed. Thus, by providing a TPM a secure place for the storage of the keys in a household is provided.

The first terminal key T-1 is preferably a symmetric key.

The method may further comprise the step of establishing a data connection between the gateway and the terminal. The data connection is preferably a wireless connection, a USB connection or a LAN connection.

The method may further comprise the step of dividing the private terminal key Pr-T into two parts Pr-T1 and Pr-T2, wherein the step of generating an encrypted private terminal key ePr-T comprises encryption of the second part Pr-T2 of the private terminal key Pr-T, and only the encrypted second part is transferred the terminal while the first part Pr-T1 remains on the gateway.

Further provided is a secure date transfer method between a gateway and a terminal comprising the steps of: generating a pair of terminal associated keys Pub-T, Pr-T according to the inventive method for generating a pair of terminal associated keys, encrypting on the gateway content with a symmetric content key C-1 and generating an encrypted content key eC-1 by encrypting the symmetric content key C-1 with the public terminal key Pub-T, transferring the encrypted content and the encrypted content key eC-1 to the terminal; and decrypting the encrypted content key eC-1 with the private terminal key Pr-T and decrypting the encrypted content with content key C-1.

The content may be anything provided in digital form and may comprise at least one of data or a licence.

Further provided is a home gateway according to claim 9.

The invention solves the problem of key management by introducing unique key pairs for each user on a gateway.

The gateway preferably comprises a trusted platform module adapted to store the public gateway key Pub-G, the private gateway key Pr-G, the public terminal key Pub-T and the private terminal key Pr-T.

Further provided is a terminal according to claim 11.

According to another aspect of the invention, a system according to claim 12 for generating a pair of encryption keys comprising a terminal according to claim 11 and a gateway according to claim 9 is provided.

Further aspects of the invention are set forth in the following description, the drawings and the dependent claims.

### BRIEF DESCRIPTION OF THE DRAWINGS

In the drawings, same element numbers indicate same elements in each of the views:
- Figure 1: is a schematic illustration of the method for generating a pair of terminal associated keys;
- Figure 2: is a schematic illustration of a secure date transfer method between a gateway and a terminal;
- Figure 3: is a schematic illustration of a gateway according to the invention;
- Figure 4: is a schematic illustration of a terminal according to the invention; and
- Figure 5: is a schematic illustration of a system for key generation according to the invention.

### DESCRIPTION OF THE PREFERRED EMBODIMENTS

The described home gateway in the following is installed in a private network, preferably in a private household. The home gateway becomes the administrative interface for additional clients that are connected to the home gateway and to the handover of encrypted key material. It is pointed out that the term "gateway" used in the following description relates to a home gateway in a private network, for instance in a private household. Thus, an end user can manage keys of his private appliances or terminals without the need for a centralized key management system accessible over the internet.

In a preferred embodiment, the invention will be described with reference to a license management system, which complies with digital rights management standards like OMA DRM 2.0. The first step of granting licenses and encryption of digital content is to provide for each user on a gateway a pair of user specific gateway keys (private / public key). The private part is then stored on the gateway and the public gateway key is published. Licenses can now be encrypted by suppliers of digital content with the public gateway key and only be decrypted with the private gateway key on the gateway and are thus personalized. Content can be encrypted with a symmetric key; this is then encrypted with the public gateway key of the user. The encrypted content and the encrypted key are then transferred to the gateway. The symmetric key is decrypted with the private key and the content can then be decrypted.

This procedure is safe and is a reasonable alternative to conventional remote key management techniques. However, the decryption needs to take place on the gateway. In the following, it will be described how to allow the granting of licenses for different terminals and to solve the problem of mobile consumption of protected digital content.

To generate terminal-specific keys and to associate these with a user, software clients on any terminal generate a symmetric key and encrypt it with the public gateway key. The encrypted key is transmitted to the gateway and the gateway generates a new key pair for the terminal, and encrypts the private key with a symmetric key. The public key is then published. The encrypted private key can now be securely transmitted to the terminal and be provided with a specific lifetime. The content will be re-encrypted with a symmetric key and the symmetric key is encrypted with the device-specific public key. Subsequently, the content and encrypted key can be transferred to the terminal, which may be a mobile terminal.

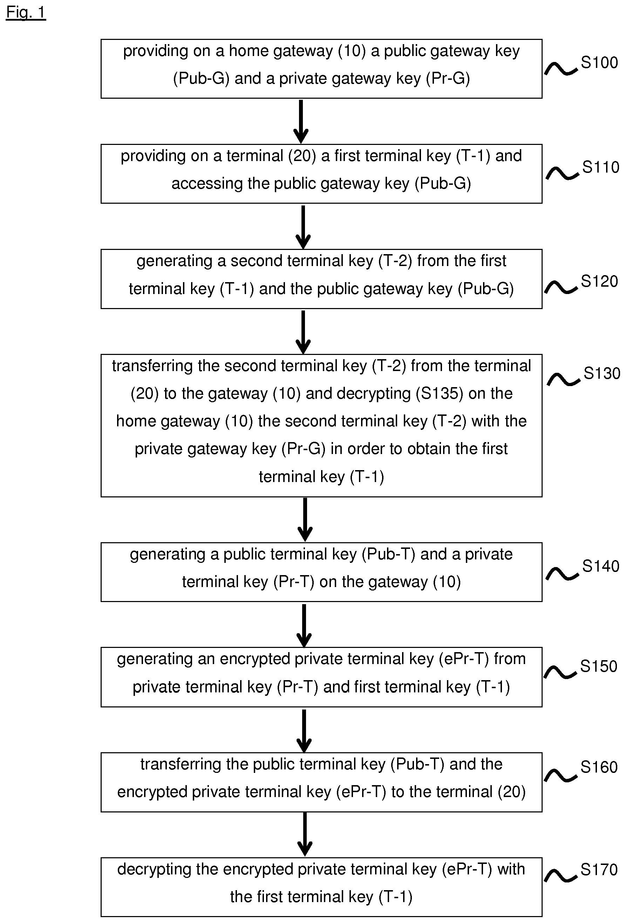

Figure 1 shows a schematic illustration of the method for generating a pair of terminal associated keys. In the first step, in step S100, a pair of gateway associated keys comprising a public gateway key Pub-G and a private gateway key Pr-G are provided on a gateway. In the next step, step S 110, a terminal associated first terminal key T-1 is provided on a terminal and the public gateway key Pub-G is accessed. The terminal is preferably a remote terminal, i.e. a terminal at a remote location from the gateway. The terminal may be a mobile terminal. This is followed by generating a second terminal key T-2 by encrypting the first terminal key T-1 with the public gateway key Pub-G on the terminal 20 in step S120. The second terminal key T-2 is then transferred from the terminal 20 to the gateway 10 (step S130) and the second terminal key (T-2) is decrypted with the private gateway key Pr-G in order to obtain the first terminal key T-1. Subsequently, a pair of terminal associated keys comprising a public terminal key Pub-T and a private terminal key Pr-T are generated on the gateway 10 (step S140). In step S150, an encrypted private terminal key ePr-T is generated by encrypting the private terminal key Pr-T with the first terminal key T-1 on the gateway 10. The public terminal key Pub-T and the encrypted private terminal key ePr-T are then transferred to the terminal 20 in step S160. In the final step S170, the encrypted private terminal key ePr-T is decrypted first with the first terminal key T-1.

Thus, the inventive method allows generating user specific and also terminal specific keys for content encryption.

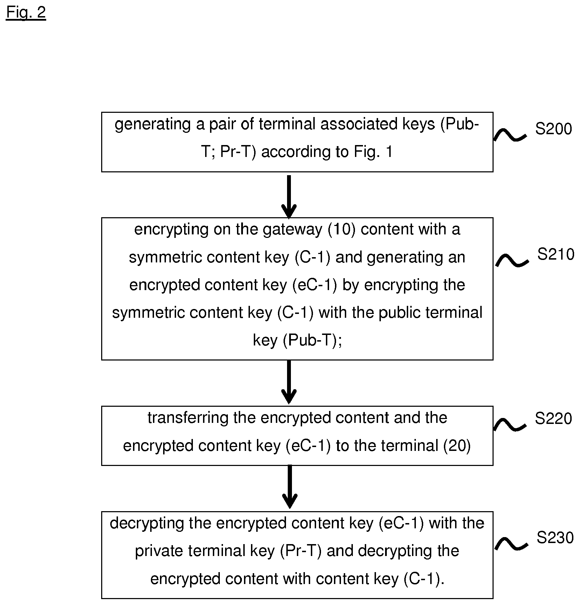

The content encryption will be described with reference to Figure 2, which illustrates the inventive secure date transfer method between a gateway 10 and a terminal 20. In a first step S200, a pair of terminal associated keys Pub-T, Pr-T according to the above inventive method of generating terminal specific keys as described with reference to Figure 1 are generated. In step S210, content is encrypted on the gateway 10 with a symmetric content key C-1 and an encrypted content key eC-1 is generated by encrypting the symmetric content key C-1 with the public terminal key Pub-T. Content may be anything provided in digital form, like data, licences etc. In step S220, the encrypted content and the encrypted content key eC-1 are transferred to the terminal 20.

In the final step S230, the encrypted content key eC-1 is decrypted with the private terminal key Pr-T and the encrypted content is decrypted with content key C-1.

This approach solves the problems associated with the current digital rights management standard for mobile devices Open Mobile Alliance Digital Rights Management (OMA DRM 2.0). With OMA DRM 2.0, the certificates must be produced by the manufacturer of the device or terminal. If the terminal was cracked by Hackers, the keys are entered on a central list and are no longer available for the playing of digital content. This, however, can make the device unusable for the user.

In the inventive solution, the client software can easily generate a new key pair, newly encrypt then and discard the old keys. Another positive side effect is the possibility to replace keys, if they no longer meet the cryptographic requirements. To increase security, the private key of the terminals may be divided into two parts. One part of the key remains on the gateway and the other portion is sent to the terminal.

In order not to have the gateway online all the time, messages between the terminal and the gateway may be exchanged to wake up the gateway if its participation is required.

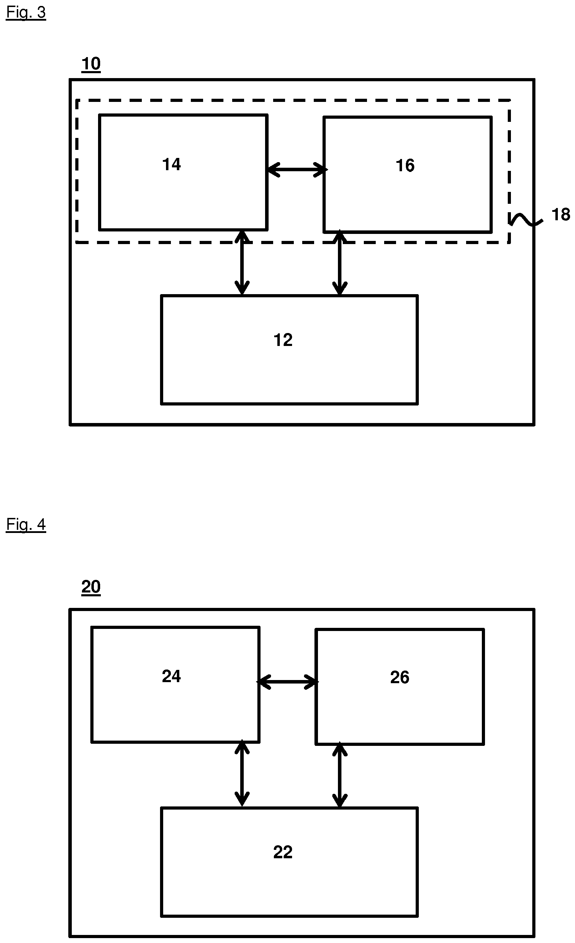

Figure 3 shows an inventive gateway 10 for generating a pair of keys associated with a remote terminal 20. The gateway 10 comprises a gateway communication unit 12, a gateway key generation unit 14 and a gateway computing unit 16. The gateway key generation unit 14 and the gateway computing unit 16 may form part of a trusted platform module 18. The gateway key generation unit 14 is configured to communicate, preferably bi-directionally with the gateway computing unit 16. Also, the gateway communication unit 12 can communicate with the gateway key generation unit 14 and the gateway computing unit 16. The gateway communication unit is configured to establish a communication channel with a remote terminal 20 to receive a second terminal key T-2 from a terminal 20. The gateway key generation unit 14 is adapted to generate a pair of gateway associated keys comprising a public gateway key Pub-G and a private gateway key Pr-G, and a pair of terminal associated keys comprising a public terminal key Pub-T and a private terminal key Pr-T. The gateway computing unit 16 is configured to generate an encrypted private terminal key ePr-T by encrypting the private terminal key Pr-T with the first terminal key T-1. The gateway communication unit 12 is further adapted for transferring the public terminal key Pub-T and the encrypted private terminal key ePr-T to the remote terminal 20.

Figure 4 shows terminal 20 for generating a pair of terminal associated keys in conjunction with a gateway 10. The terminal 20 comprises a terminal communication unit 22, a terminal key generation unit 24, and a terminal computing unit 26. Each element of the terminal 20 is configured to communication with one another. The terminal communication unit 22 is adapted for establishing a communication channel with a remote gateway 10 and adapted for accessing a public gateway key Pub-G from the gateway 10. The terminal key generation unit 24 adapted to generate a terminal associated first terminal key T-1. The terminal computing unit 26 is adapted to generate a second terminal key T-2 by encrypting the first terminal key T-1 with the public gateway key Pub-G. According to the invention, the terminal communication unit 22 is adapted for transferring the generated second terminal key T-2 to the remote gateway 10 and is adapted for receiving a public terminal key Pub-T and an encrypted private terminal key ePr-T from the gateway 10, and the terminal computing unit 26 is adapted to decrypt the encrypted private terminal key ePr-T with the first terminal key T-1.

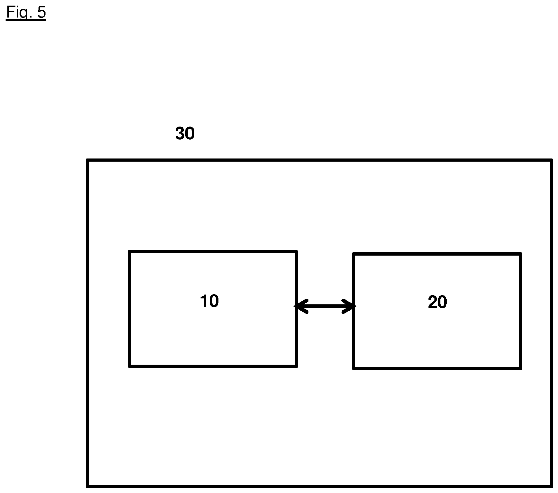

Figure 5 shows an inventive key generation and secure data transfer system 30 comprising an inventive gateway 10 and a terminal 20, which are adapted to communicate with each other. The communication may include wakeup-calls send from the terminal or the gateway.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

### LIST OF REFERENCE SIGNS

- 10: gateway
- 12: gateway communication unit
- 14: gateway key generation unit
- 16: gateway computing unit
- 18: gateway trusted platform module

- 20: terminal
- 22: terminal communication unit
- 24: terminal key generation unit
- 26: terminal computing unit

- 30: system

- Pr-G: private gateway key
- Pub-G: public gateway key
- Pr-T: private terminal key
Pr-T1 first part of private terminal key
Pr-T2 second part of private terminal key
- Pub-T: public gateway key
- T-1: first terminal key
- T-2: second terminal key
- ePr-T: encrypted private terminal key
- C-1: content key
- eC-1: encrypted content key

## Claims

1. Method for generating a pair of terminal associated keys comprising the steps of:
providing (S100) on a home gateway (10) in a home area network a pair of gateway associated keys comprising a public gateway key (Pub-G) and a private gateway key (Pr-G);
providing (S110) on a terminal (20) of the home area network a terminal associated first terminal key (T-1) and accessing the public gateway key (Pub-G);
generating (S120) a second terminal key (T-2) by encrypting the first terminal key (T-1) with the public gateway key (Pub-G) on the terminal (20);
transferring (S130) the second terminal key (T-2) from the terminal (20) to the home gateway (10) and decrypting (S135) on the home gateway (10) the second terminal key (T-2) with the private gateway key (Pr-G) in order to obtain the first terminal key (T-1);
generating (S140) a pair of terminal associated keys comprising a public terminal key (Pub-T) and a private terminal key (Pr-T) on the home gateway (10);
generating (S150) an encrypted private terminal key (ePr-T) by encrypting the private terminal key (Pr-T) with the first terminal key (T-1) on the home gateway (10);
transferring (S160) the public terminal key (Pub-T) and the encrypted private terminal key (ePr-T) to the terminal (20); and
decrypting (S170) the encrypted private terminal key (ePr-T) with the first terminal key (T-1).

2. The method according to claim 1, wherein the home gateway comprises a trusted platform module (18) and the method further comprises the step of storing the pair of gateway keys (Pub-G, Pr-G) and the pair of terminal keys (Pub-T, Pr-T) in the trusted platform module (18).

3. The method according to claim 1 or 2, wherein the first terminal key (T-1) is a symmetric key.

4. The method according to claim 1 or 2, further comprising the step of establishing a data connection between the home gateway (10) and the terminal (20).

5. The method according to claim 4, wherein the data connection is a wireless connection, a USB connection or a LAN connection.

6. The method according to any of the previous claims, further comprises the step of dividing the private terminal key (Pr-T) into two parts (Pr-T1, Pr-T2), wherein the step of generating (S150) an encrypted private terminal key (ePr-T) comprises encryption of the second part (Pr-T2) of the private terminal key (Pr-T), and only the encrypted second part is transferred the terminal (20) while the first part (Pr-T1) remains on the gateway (10).

7. Secure date transfer method between a home gateway (10) in a home area network and a terminal (20) comprising the steps of:
generating (200) a pair of terminal associated keys (Pub-T, Pr-T) according to a method as claimed in any of claims 1 to 6;
encrypting (S210) on the home gateway (10) content with a symmetric content key (C-1) and generating an encrypted content key (eC-1) by encrypting the symmetric content key (C-1) with the public terminal key (Pub-T);
transferring (S220) the encrypted content and the encrypted content key (eC-1) to the terminal (20); and
decrypting (S230) the encrypted content key (eC-1) with the private terminal key (Pr-T) and decrypting the encrypted content with content key (C-1).

8. The method of claim 7, wherein content comprises at least one of data or a licence.

9. A home gateway in a home area network for generating a pair of keys together with a remote terminal (20) of the home area network, the home gateway (10) comprises:
a gateway communication unit (12) configured to establish a communication channel with the remote terminal (20) to receive a second terminal key (T-2) from the terminal (20);
a gateway key generation unit (14) configured to generate a pair of gateway associated keys comprising a public gateway key (Pub-G) and a private gateway key (Pr-G), and a pair of terminal associated keys comprising a public terminal key (Pub-T) and a private terminal key (Pr-T); and
a gateway computing unit (16) configured to
- decrypting the second terminal key (T-2) with the private gateway key (Pr-G) to obtain a first terminal key (T-1);
- generate an encrypted private terminal key (ePr-T) by encrypting the private terminal key (Pr-T) with the first terminal key (T-1);
wherein
the gateway communication unit (12) is further configured to transfer the public terminal key (Pub-T) and the encrypted private terminal key (ePr-T) to the remote terminal (20).

10. The home gateway (10) of claim 9, wherein the home gateway (10) comprises a trusted platform module (18) adapted to store the public gateway key (Pub-G), the a private gateway key (Pr-G), the public terminal key (Pub-T) and the private terminal key (Pr-T).

11. A terminal (20) of a home area network for generating a pair of terminal associated keys comprising a public terminal key and a private terminal key together with a remote gateway (10) in the home area network, the terminal (20) comprising:
a terminal communication unit (22) configured to establish a communication channel with a remote home gateway (10) and configured to access a public gateway key (Pub-G) from the home gateway (10);
a terminal key generation unit (24) configured to generate a terminal associated first terminal key (T-1);
a terminal computing unit (26) configured to generate a second terminal key (T-2) by encrypting the first terminal key (T-1) with the public gateway key (Pub-G);
wherein
the terminal communication unit (22) is configured to transfer the generated second terminal key (T-2) to the remote gateway (10) and is configured to receive the public terminal key (Pub-T) and an encrypted private terminal key (ePr-T) from the home gateway (10); and
the terminal computing unit (26) is configured to decrypt the encrypted private terminal key (ePr-T) with the first terminal key (T-1).

12. System for generating a pair of encryption keys comprising a terminal (20) according to claim 11 and a home gateway (10) according to claims 9 or 10.

## Patentansprüche

1. Verfahren zur Erzeugung eines Paares von mit einem Endgerät assoziierten Schlüsseln, umfassend die folgenden Schritte:
Bereitstellen (S100), auf einem Home-Gateway (10) in einem Home Area Network, eines Paares von mit dem Gateway assoziierten Schlüsseln, umfassend einen öffentlichen Gateway-Schlüssel (Pub-G) und einen privaten Gateway-Schlüssel (Pr-G);
Bereitstellen (S110), auf einem Endgerät (20) des Home Area Network, eines mit dem Endgerät assoziierten ersten Endgeräteschlüssels (T-1) und Zugreifen auf den öffentlichen Gateway-Schlüssel (Pub-G);
Erzeugen (S120) eines zweiten Endgeräteschlüssels (T-2) durch Verschlüsseln des ersten Endgeräteschlüssels (T-1) mit dem öffentlichen Gateway-Schlüssel (Pub-G) auf dem Endgerät (20);
Transferieren (S130) des zweiten Endgeräteschlüssels (T-2) von dem Endgerät (20) zu dem Home-Gateway (10) und Entschlüsseln (S135), auf dem Home-Gateway (10), des zweiten Endgeräteschlüssels (T-2) mit dem privaten Gateway-Schlüssel (Pr-G), um den ersten Endgeräteschlüssel (T-1) zu erlangen;
Erzeugen (S140) eines Paares von mit dem Endgerät assoziierten Schlüsseln, umfassend einen öffentlichen Endgeräteschlüssel (Pub-T) und einen privaten Endgeräteschlüssel (Pr-T), auf dem Home-Gateway (10);
Erzeugen (S150) eines verschlüsselten privaten Endgeräteschlüssels (ePr-T) durch Verschlüsseln des privaten Endgeräteschlüssels (Pr-T) mit dem ersten Endgeräteschlüssel (T-1) auf dem Home-Gateway (10);
Transferieren (S160) des öffentlichen Endgeräteschlüssels (Pub-T) und des verschlüsselten privaten Endgeräteschlüssels (ePr-T) zu dem Endgerät (20); und
Entschlüsseln (S170) des verschlüsselten privaten Endgeräteschlüssels (ePr-T) mit dem ersten Endgeräteschlüssel (T-1).

2. Verfahren nach Anspruch 1, wobei das Home-Gateway ein Trusted Platform Module (18) umfasst und das Verfahren ferner den Schritt des Speicherns des Paares von Gateway-Schlüsseln (Pub-G, Pr-G) und des Paares von Endgeräteschlüsseln (Pub-T, Pr-T) in dem Trusted Platform Module (18) umfasst.

3. Verfahren nach Anspruch 1 oder 2, wobei der erste Endgeräteschlüssel (T-1) ein symmetrischer Schlüssel ist.

4. Verfahren nach Anspruch 1 oder 2, ferner umfassend den Schritt des Herstellens einer Datenverbindung zwischen dem Home-Gateway (10) und dem Endgerät (20).

5. Verfahren nach Anspruch 4, wobei die Datenverbindung eine drahtlose Verbindung, eine USB-Verbindung oder eine LAN-Verbindung ist.

6. Verfahren nach einem der vorangehenden Ansprüche, ferner umfassend den Schritt des Unterteilens des privaten Endgeräteschlüssels (Pr-T) in zwei Teile (Pr-T1, Pr-T2), wobei der Schritt des Erzeugens (S150) eines verschlüsselten privaten Endgeräteschlüssels (ePr-T) das Verschlüsseln des zweiten Teiles (Pr-T2) des privaten Endgeräteschlüssels (Pr-T) umfasst und nur der verschlüsselte zweite Teil zu dem Endgerät (20) transferiert wird, während der erste Teil (Pr-T1) auf dem Gateway (10) verbleibt.

7. Verfahren zum sicheren Datentransfer zwischen einem Home-Gateway (10) in einem Home Area Network und einem Endgerät (20), umfassend die folgenden Schritte:
Erzeugen (200) eines Paares von mit dem Endgerät assoziierten Schlüsseln (Pub-T, Pr-T) gemäß einem Verfahren nach einem der Ansprüche 1 bis 6;
Verschlüsseln (S210), auf dem Home-Gateway (10), von Inhalt mit einem symmetrischen Inhaltsschlüssel (C-1) und Erzeugen eines verschlüsselten Inhaltsschlüssels (eC-1) durch Verschlüsseln des symmetrischen Inhaltsschlüssels (C-1) mit dem öffentlichen Endgeräteschlüssel (Pub-T);
Transferieren (S220) des verschlüsselten Inhaltes und des verschlüsselten Inhaltsschlüssels (eC-1) zu dem Endgerät (20); und
Entschlüsseln (S230) des verschlüsselten Inhaltsschlüssels (eC-1) mit dem privaten Endgeräteschlüssel (Pr-T) und Entschlüsseln des verschlüsselten Inhaltes mit dem Inhaltsschlüssel (C-1).

8. Verfahren nach Anspruch 7, wobei Inhalt Daten oder/und eine Lizenz umfasst.

9. Home-Gateway in einem Home Area Network zur Erzeugung eines Paares von Schlüsseln zusammen mit einem entfernt aufgestellten Endgerät (20) des Home Area Network, wobei das Home-Gateway (10) umfasst:
eine Gateway-Kommunikationseinheit (12), die so konfiguriert ist, dass sie einen Kommunikationskanal mit dem entfernt aufgestellten Endgerät (20) herstellt, um einen zweiten Endgeräteschlüssel (T-2) aus dem Endgerät (20) zu empfangen;
eine Gateway-Schlüssel-Erzeugungseinheit (14), die so konfiguriert ist, dass sie erzeugt: ein Paar von mit dem Gateway assoziierten Schlüsseln, umfassend einen öffentlichen Gateway-Schlüssel (Pub-G) und einen privaten Gateway-Schlüssel (Pr-G), und ein Paar von mit dem Endgerät assoziierten Schlüsseln, umfassend einen öffentlichen Endgeräteschlüssel (Pub-T) und einen privaten Endgeräteschlüssel (Pr-T); und
eine Gateway-Recheneinheit (16), die so konfiguriert ist, dass sie
- den zweiten Endgeräteschlüssel (T-2) mit dem privaten Gateway-Schlüssel (Pr-G) entschlüsselt, um einen ersten Endgeräteschlüssel (T-1) zu erlangen;
- einen verschlüsselten privaten Endgeräteschlüssel (ePr-T) durch Verschlüsseln des privaten Endgeräteschlüssels (Pr-T) mit dem ersten Endgeräteschlüssel (T-1) erzeugt;
wobei
die Gateway-Kommunikationseinheit (12) ferner so konfiguriert ist, dass sie den öffentlichen Endgeräteschlüssel (Pub-T) und den verschlüsselten privaten Endgeräteschlüssel (ePr-T) zu dem entfernt aufgestellten Endgerät (20) transferiert.

10. Home-Gateway (10) nach Anspruch 9, wobei das Home-Gateway (10) ein Trusted Platform Module (18) umfasst, das so angepasst ist, dass es den öffentlichen Gateway-Schlüssel (Pub-G), den privaten Gateway-Schlüssel (Pr-G), den öffentlichen Endgeräteschlüssel (Pub-T) und den privaten Endgeräteschlüssel (Pr-T) speichert.

11. Endgerät (20) eines Home Area Network zur Erzeugung eines Paares von mit dem Endgerät assoziierten Schlüsseln, umfassend einen öffentlichen Endgeräteschlüssel und einen privaten Endgeräteschlüssel, zusammen mit einem entfernt aufgestellten Gateway (10) in dem Home Area Network, wobei das Endgerät (20) umfasst:
eine Endgerätekommunikationseinheit (22), die so konfiguriert ist, dass sie einen Kommunikationskanal mit einem entfernt aufgestellten Home-Gateway (10) herstellt, und so konfiguriert ist, dass sie von dem Home-Gateway (10) aus auf einen öffentlichen Gateway-Schlüssel (Pub-G) zugreift;
eine Endgeräteschlüssel-Erzeugungseinheit (24), die so konfiguriert ist, dass sie einen mit dem Endgerät assoziierten ersten Endgeräteschlüssel (T-1) erzeugt;
eine Endgeräterecheneinheit (26), die so konfiguriert ist, dass sie einen zweiten Endgeräteschlüssel (T-2) durch Verschlüsseln des ersten Endgeräteschlüssels (T-1) mit dem öffentlichen Gateway-Schlüssel (Pub-G) erzeugt;
wobei
die Endgerätekommunikationseinheit (22) so konfiguriert ist, dass sie den erzeugten zweiten Endgeräteschlüssel (T-2) zu dem entfernt aufgestellten Gateway (10) transferiert, und so konfiguriert ist, dass sie den öffentlichen Endgeräteschlüssel (Pub-T) und einen verschlüsselten privaten Endgeräteschlüssel (ePr-T) aus dem Home-Gateway (10) empfängt; und
die Endgeräterecheneinheit (26) so konfiguriert ist, dass sie den verschlüsselten privaten Endgeräteschlüssel (ePr-T) mit dem ersten Endgeräteschlüssel (T-1) entschlüsselt.

12. System zur Erzeugung eines Paares von Verschlüsselungsschlüsseln, umfassend ein Endgerät (20) nach Anspruch 11 und ein Home-Gateway (10) nach Anspruch 9 oder 10.

## Revendications

1. Procédé de génération d'une paire de clés associées à un terminal, comprenant les étapes suivantes :
fourniture (S100), sur une passerelle domestique (10) d'un réseau local domestique, d'une paire de clés associées à une passerelle, comprenant une clé de passerelle publique (Pub-G) et une clé de passerelle privée (Pr-G) ;
fourniture (S110), sur un terminal (20) du réseau local domestique (2) d'une première clé de terminal (T-1) associée au terminal et l'accès à la clé de passerelle publique (Pub-G) ;
génération (S120) d'une deuxième clé de terminal (T-2) par cryptage de la première clé de terminal (T-1) avec la clé de passerelle publique (Pub-G) sur le terminal (20) ;
transfert (S130) de la deuxième clé de terminal (T-2) du terminal (20) à la passerelle domestique (10) et le décryptage (S135) sur la passerelle domestique (10) de la deuxième clé de terminal (T-2) avec la clé de passerelle privée (Pr-G) pour obtenir la première clé de terminal (T-1) ;
génération (S140) d'une paire de clés associées à un terminal comprenant une clé de terminal publique (Pub-T) et une clé de terminal privée (Pr-T) sur la passerelle domestique (10) ;
génération (S150) d'une clé de terminal privée cryptée (ePr-T) par cryptage de la clé de terminal privée (Pr-T) avec la première clé de terminal (T-1) sur la passerelle domestique (10) ;
transfert (S160) de la clé de terminal publique (Pub-T) et de la clé de terminal privée cryptée (ePr-T) au terminal (20) ; et
décryptage (S170) de la clé de terminal privée cryptée (ePr-T) avec la première clé de terminal (T-1).

2. Procédé selon la revendication 1, où la passerelle domestique comprend un module de plateforme sécurisée (18) et le procédé comprend en outre l'étape de mémorisation de la paire de clés de passerelle (Pub-G, Pr-G) et de la paire de clés de terminal (Pub-T, Pr-T) dans le module de plateforme sécurisée (18).

3. Procédé selon la revendication 1 ou la revendication 2, où la première clé de terminal (T-1) est une clé symétrique.

4. Procédé selon la revendication 1 ou la revendication 2, comprenant en outre l'étape d'établissement d'une connexion de données entre la passerelle domestique (10) et le terminal (20).

5. Procédé selon la revendication 4, où la connexion de données est une connexion radio, une connexion USB ou une connexion LAN.

6. Procédé selon l'une des revendications précédentes, comprenant en outre l'étape de division de la clé de terminal privée (Pr-T) en deux parties (Pr-T1, Pr-T2), l'étape de génération (S150) d'une clé de terminal privée cryptée (ePr-T) comprenant le cryptage de la deuxième partie (Pr-T2) de la clé de terminal privée (Pr-T), et la deuxième partie cryptée étant seule transférée au terminal (20), la première partie (Pr-T1) restant sur la passerelle (10).

7. Procédé de transfert de données sécurisé entre une passerelle domestique (10) d'un réseau local domestique et un terminal (20), comprenant les étapes suivantes :
génération (200) d'une paire de clés associées à un terminal (Pub-T, Pr-T) conformément au procédé selon l'une des revendications 1 à 6 ;
cryptage (S210) sur la passerelle domestique (10) d'un contenu avec une clé de contenu symétrique (C-1) et génération d'une clé de contenu cryptée (eC-1) par cryptage de la clé de contenu symétrique (C-1) avec la clé de terminal publique (Pub-T) ;
transfert (S220) du contenu crypté et de la clé de contenu cryptée (eC-1) au terminal (20) ; et
décryptage (S230) de la clé de contenu cryptée (eC-1) avec la clé de terminal privée (Pr-T) et décryptage du contenu crypté avec la clé de contenu (C-1).

8. Procédé selon la revendication 7, où le contenu comprend des données et/ou une licence.

9. Passerelle domestique d'un réseau local domestique pour la génération d'une paire de clés avec un terminal distant (20) du réseau local domestique, ladite passerelle domestique (10) comprenant :
une unité de communication de passerelle (12) prévue pour établir un canal de communication avec le terminal distant (20) pour recevoir une deuxième clé de terminal (T-2) du terminal (20) ;
une unité de génération de clés de passerelle (14) prévue pour générer une paire de clés associées à une passerelle, comprenant une clé de passerelle publique (Pub-G) et une clé de passerelle privée (Pr-G), et une paire de clés associées à un terminal comprenant une clé de terminal publique (Pub-T) et une clé de terminal privée (Pr-T) ; et
une unité de calcul de passerelle (16) prévue pour
- décrypter la deuxième clé de terminal (T-2) avec la clé de passerelle privée (Pr-G) pour obtenir une première clé de terminal (T-1) ;
- générer une clé de terminal privée cryptée (ePr-T) par cryptage de la clé de terminal privée (Pr-T) avec la première clé de terminal (T-1) ;
l'unité de communication de passerelle (12) étant en outre prévue pour transférer la clé de terminal publique (Pub-T) et la clé de terminal privée cryptée (ePr-T) au terminal distant (20).

10. Passerelle domestique (10) selon la revendication 9, ladite passerelle domestique (10) comprenant un module de plateforme sécurisée (18) prévu pour mémoriser la clé de passerelle publique (Pub-G), la clé de passerelle privée (Pr-G), la clé de terminal publique (Pub-T) et la clé de terminal privée (Pr-T).

11. Terminal (20) d'un réseau local domestique, destiné à générer une paire de clés associées à un terminal, comprenant une clé de terminal publique et une clé de terminal privée avec une passerelle distante (10) dans le réseau local domestique,
ledit terminal (20) comprenant :
une unité de communication de terminal (22) prévue pour établir un canal de communication avec une passerelle distante domestique (10), et prévue pour accéder à une clé de passerelle publique (Pub-G) depuis la passerelle domestique (10) ;
une unité de génération de clé de terminal (24) prévue pour générer une première clé de terminal (T-1) associée au terminal ;
une unité de calcul de terminal (26) prévue pour générer une deuxième clé de terminal (T-2) par cryptage de la première clé de terminal (T-1) avec la clé de passerelle publique (Pub-G) ;
l'unité de communication de terminal (22) étant prévue pour transférer la deuxième clé de terminal (T-2) générée à la passerelle distante (10), et étant prévu pour recevoir la clé de terminal publique (Pub-T) et une clé de terminal privée cryptée (ePr-T) de la passerelle domestique (10) ; et
l'unité de calcul de terminal (26) étant prévue pour décrypter la clé de terminal privée cryptée (ePr-T) avec la première clé de terminal (T-1).

12. Système pour la génération d'une paire de clés de cryptage, comprenant un terminal (20) selon la revendication 11 et une passerelle domestique (10) selon la revendication 9 ou la revendication 10.
